**Europäisches Patentamt**

**European Patent Office**

**Office européen des brevets**

(19)

(11) Veröffentlichungsnummer: **0 024 721**
**A2**

(12) **EUROPÄISCHE PATENTANMELDUNG**

(21) Anmeldenummer: **80105065.9**

(22) Anmeldetag: **26.08.80**

(51) Int. Cl.³: **G 06 F 13/00**

(30) Priorität: **28.08.79 DE 2934771**

(43) Veröffentlichungstag der Anmeldung:
**11.03.81 Patentblatt 81/10**

(84) Benannte Vertragsstaaten:
**AT BE CH FR GB IT LI LU NL SE**

(71) Anmelder: **SIEMENS AKTIENGESELLSCHAFT Berlin und München**
**Postfach 22 02 61**
**D-8000 München 22(DE)**

(72) Erfinder: **Prasch, Hermann, Dipl.-Ing.**
**Schumannstrasse 22**
**D-8011 Baldham(DE)**

(72) Erfinder: **Süss, Michael, Dipl.-Ing.**
**Gletscherweg 5**
**D-8031 Geisenbrunn(DE)**

(54) **Speichervorrichtung.**

(57) Bei kleinen Datenverarbeitungssystemen, die z. B. im Bürobetrieb verwendet werden, ist eine Speichervorrichtung kleiner Zugriffszeit erforderlich, deren Kosten jedoch gering bleiben sollen. Diese Anforderungen werden dadurch erreicht, daß die Speichervorrichtung aus einem langsamen Arbeitsspeicher (ASP), einem schnelleren Pufferspeicher (PS) und einem Multiplexer (MUX) besteht. Der Pufferspeicher (PS) besteht aus Registern (RR). Jedes Register ist jeweils einer Wortart (Befehl, Operand A, Operand B) fest zugeordnet. Bei einer Speicheranforderung werden die dem gleichen Adressenraum zugeordneten Worte aus dem Arbeitsspeicher (ASP) in das der Wortart zugeordnete Register (RR) im Pufferspeicher (PS) übertragen. Die Ausgabe des angeforderten Wortes zum Prozessor erfolgt mit Hilfe des Multiplexers (MUX), der aus einem Adressenteil, bestehend aus den niederwertigeren Adressenbits das gewünschte Wort aus dem Register auswählt und dem Prozessor zuführt.

FIG1

EP 0 024 721 A2

Croydon Printing Company Ltd.

SIEMENS AKTIENGESELLSCHAFT        Unser Zeichen

Berlin und München               VPA
                                    79 P 2 0 5 0 EURO

## Speichervorrichtung

Die Erfindung bezieht sich auf eine Speichervorrichtung
mit einem Arbeitsspeicher und einem Pufferspeicher, bei
dem bei Anforderung eines gespeicherten Wortes von der
Adresse aus gesehen benachbart zu dem angeforderten Wort
im Arbeitsspeicher angeordnete Worte vom Arbeitsspeicher
zum Pufferspeicher übertragen werden und weitere angeforderte Worte mit Hilfe eines Multiplexers aus dem Pufferspeicher ausgewählt werden.

Moderne Prozessoren haben sehr hohe Verarbeitungsdurchsätze.
Dies gilt in besonderem Maße für derzeit auf dem Markt angebotene schnelle bipolare Prozessorbausteine. Diese Prozessoren ermöglichen aufgrund ihrer Technologie sehr kurze
Zykluszeiten von z.B. 180 ns.

Aufgrund dieser an sich wünschenswerten Eigenschaften stellen
Systeme, die mit derartigen Prozessoren ausgestattet sind,
hohe Anforderungen an die Arbeitsspeicher. Zum einen müssen
Arbeitsspeicher derartiger Systeme wegen ihrer hohen Ver-

Il 1 Pe / 22.8.1979

arbeitungsgeschwindigkeit einen erheblichen Umfang aufweisen, da sonst das Gesamtsystem kaum effektiv arbeiten kann.
Zum anderen müssen diese Speicher erheblichen Geschwindigkeitsanforderungen in ihrem Zugriffs-und Zyklusverhalten
genügen. Die Forderung nach Umfang des Speichers ist nicht
zu umgehen, solange nicht schnellere Hintergrundspeicher
verfügbar sind. Kurze Zugriffszeiten lassen sich direkt
nur mit bipolaren Speicherbausteinen mit hohem Leistungsbedarf auf niedrigem Integrationsgrad erreichen.

Bei billigeren Datenverarbeitungssystemen, die z.B. für
Textverarbeitung verwendet werden, ist aufgrund von Kosten
und Umfang nur eine Entscheidung für langsamere dynamische
MOS-Speicher möglich. Die Zugriffszeit zu derartigen MOS-
Speichern liegt bei ca. 470 ns, ihre Zykluszeit beträgt
600 ns. Setzt man die oben genannte Zykluszeit eines schnellen Prozessors dazu ins Verhältnis, so ist zu erkennen,
daß die Speicherzykluszeit ungefähr den dreifachen Wert
der Prozessorzykluszeit von 180 ns ausmacht. Dies ist ein
krasses Mißverhältnis, besonders wenn von durchsatzintensiven Mikroprogrammen mit den häufigen Zugriffen ausgegangen wird.

Die Verwendung von schnellen Prozessoren erfordert also
entweder die Verwendung sehr schneller Speicher oder aber
die Verwendung von langsameren MOS-Speichern unter Ausnutzung eines guten Speicherkonzeptes. Da die Verwendung
von bipolaren Speichern wegen der Kosten und des Speicherumfanges bei billigeren Datenverarbeitungssystemen nicht
in Frage kommt, muß unter Benutzung eines MOS-Speichers
ein gutes Speicherkonzept gefunden werden. Lösungsversuche
in dieser Richtung sind bereits bekannt. Bei Großrechnern führten diese Lösungsversuche zu einer Speicherhierarchie, bei dem die gerade benötigten Daten vom großen, langsamen Speicher in einen kleineren schnelleren Pufferspeicher umgeladen werden, sobald aus einem Bereich eine Adresse angesprochen wurde. Dieses sogenannte Cache-Konzept ist jedoch für billigere Datenverarbeitungssysteme aus mehreren Gründen nicht besonders geeignet:

Zum Beispiel ist der Verwaltungsaufwand zu hoch und damit die damit verbundenen Kosten; der für eine gute Trefferrate erforderliche bipolare Pufferspeicher ist zu teuer; die Verlustleistung derartiger bipolarer Pufferspeicher ist zu hoch, dies ist für die Anwendung im Büro problematisch usw.

Es ist eine weitere Lösung vorgeschlagen worden, bei der nicht seriell zu einem Wort im Speicher zugegriffen wird um es dem Prozessor anzubieten, sondern eine möglichst große Anzahl von Worten parallel aus dem Speicher ausgelesen oder eingeschrieben werden. Diese parallel ausgelesenen Worte werden in ein Mehrwortregister eingespeichert und von dort mit Hilfe eines Multiplexers dem Prozessor einzeln zugeführt. Da hier der Zugriff zu den einzelnen Worten durch einen Multiplexer erfolgt, wird die zum Auslesen der Wörter aus dem Register erforderliche Zugriffszeit erheblich verkürzt. Voraussetzung für diesen Zeitgewinn ist aber, daß die nacheinander vom Prozessor angeforderten Worte in dem Register stehen und damit vom Multiplexer ausgewählt werden können. Ein solcher Fall liegt nur dann vor, wenn größere Blöcke seriell angesprochen werden. Dies ist jedoch nicht immer der Fall. Wird z.B. ein Zwei-Adressbefehl ausgeführt, dann wird zunächst der Befehl decodiert, was im wesentlichen seriell geschieht. Dann wird das erste Wort des Operanden A mit dem ersten Wort des Operanden B verknüpft und unter B abgelegt. Anschließend erfolgt derselbe Ablauf mit dem zweiten Wort usw. bis zum Ende der Zeichenreihe. Die einzelnen Datenströme sind also stark ineinander verzahnt. Würde hier die Lösung mit dem Multiplexer angewendet werden, so würde dies nur zu einer geringen Verbesserung führen, da abwechselnd Adressen aus dem Bereich des Befehles, dann aus dem Adressbereich des Operanden A und anschließend aus dem Adressbereich des Operanden B gelesen, verarbeitet werden und das Ergebnis wieder in den Bereich des Operanden B abgelegt wird.

Die der Erfindung zugrundeliegende Aufgabe besteht darin, eine Speichervorrichtung anzugeben, die von dem Lösungsprinzip mit dem Multiplexer ausgeht, jedoch deren Nachteile vermeidet. Die Aufgabe wird bei einer Speichervorrichtung der oben genannten Art dadurch gelöst, daß der Pufferspeicher aus einer der Anzahl der verschiedenen Wortarten entsprechenden Anzahl von Registern mit jeweils 1-Wort-Breite aufgebaut ist, daß jedes Register einer Wortart zugeordnet ist, daß bei Anforderung eines Wortes die Übertragung der Worte des gleichen dieser Wortart zugeordneten Adressenraums in das dieser Wortart zugeordnete Register stattfindet und daß bei Anforderung eines weiteren Wortes der gleichen Wortart aus dem gleichen Adressenraum der Zugriff zu diesem Wort mit Hilfe des Multiplexers zum Pufferspeicher erfolgt.

Die Zuordnung der Register des Pufferspeichers zu den einzelnen Wortarten erfolgt mit Hilfe eines aus dem Mikroprogramm entwickelten, die Wortart kennzeichnenden Kennung. In den einzelnen Schritten des für die Abarbeitung eines Maschinenbefehls ablaufenden Mikroprogramms liegt nämlich fest, ob zu einem Befehl, zu einem Operanden A oder zu einem Operanden B im Arbeitsspeicher zugegriffen werden soll (im folgenden werden als Wortarten ein Befehl bzw. ein Operand A bzw. ein Operand B bezeichnet). Aus dem Mikroprogramm kann somit eine Kennung entwickelt werden, die der Wortart zugeordnet ist und mit deren Hilfe die einzelnen Datenströme entkoppelt werden können. Damit ist es möglich, z.B. die Befehle in das erste Register, die Operanden A in das zweite Register, die Operanden B in das dritte Register des Pufferspeichers abzuspeichern. Somit können bei der Abarbeitung eines Befehles die einzelnen Worte des Befehles aus dem ersten Register, die einzelnen Worte des Operanden A aus dem zweiten Register und die einzelnen Worte des Operanden B aus dem dritten Register nacheinander entnommen werden. Welches Register angesteuert wird, wird durch die Kennung festgelegt.

Es ist vorteilhaft, wenn bei der Anforderung eines nicht im Pufferspeicher gespeicherten Wortes neben den zu diesem Wort benachbarten Worten (gleicher Adressenraum) auch das angeforderte Wort in den Pufferspeicher übertragen wird. Der Zugriff zu diesem Wort erfolgt dann ebenfalls mit Hilfe des Multiplexers. Dann sind keine zusätzlichen, kostenverursachende weitere Schaltkreise erforderlich.

Falls ein modularer Aufbau der Speichervorrichtung erreicht werden soll, werden zweckmäßigerweise l ($l = 2^k$, k = 1 usw.) Wortbaugruppen aus jeweils einem Speichermodul und einem Pufferspeichermodul und eine Steuerbaugruppe vorgesehen. Jedes Pufferspeichermodul enthält dann eine der Anzahl der Wortarten entsprechende Anzahl von Register. Die Wortbaugruppen sind mit einer ersten Sammelleitung zur Eingabe von Worten, einer zweiten Sammelleitung zur Ausgabe von Worten verbunden. Eine dritte Sammelleitung führt zur Steuerbaugruppe und ebenfalls zu den Speichermodulen der Wortbaugruppen. Der Steuerbaugruppe und den Pufferspeichermodulen wird die Kennung zugeführt.

Ein einfacher Aufbau der Steuerbaugruppe wird dann erreicht, wenn bei ihr ein Adressenspeicher, ein Vergleicher und eine Decodierschaltung vorgesehen wird. Der Adressenspeicher besteht aus einer Anzahl der Wortart entsprechenden, durch die Kennung identifizierbaren Anzahl von Registern, in die die n-k höherwertigen Bits der vorher bearbeiteten Adresse gespeichert sind. n ist dabei die Gesamtzahl der Bits der Adresse. Im Vergleicher wird die durch die gleiche Kennung identifizierte aktuelle Adresse mit der vorher bearbeiteten im Adressenspeicher stehenden Adresse verglichen und bei Gleichheit ein Gleichheitssignal abgegeben. Durch das Gleichheitssignal wird der Schreib- bzw. Lesevorgang in den Wortbaugruppen beeinflußt. Die Decodierschaltung wertet die k-niederwertigen Bits der Adresse aus und erzeugt Adresssignale zur Auswahl jeweils einer Wortbaugruppe. Die n-k höherwertigen Bits werden den Speichermodulen der Wortbaugruppen ebenfalls zugeführt.

Zum Einschreiben von Worten in die Wortbaugruppen sind die Speichermodule und die Pufferspeichermodule der einzelnen Wortbaugruppen mit der ersten Sammelleitung verbunden. Beim Schreiben eines Wortes sind zwei Fälle zu unterscheiden. Liegt ein Gleichheitsignal vom Vergleicher vor, dann wird das Wort gleichzeitig in den durch das Adressiersignal ausgewählten Speichermodul und in das durch die Kennung identi-

0024721

79 P 2 0 5 0 *EUR*

fizierte Register des zugeordneten Pufferspeichers eingeschrieben. Liegt dagegen kein Gleichheitssignal vom Vergleicher vor, dann wird das Wort nur in das vom Adressiersignal ausgewählte Speichermodul eingespeichert.

Zum Lesen werden die Pufferspeichermodule mit der zweiten
Sammelleitung verbunden. Auch hier sind zwei Fälle zu
unterscheiden. Liegt ein Gleichheitssignal vor, so wird
das durch die Kennung identifizierte Register des durch
das Adressensignal ausgewählten Pufferspeichermoduls an
die Sammelleitung angelegt. Liegt dagegen kein Gleichheitssignal vor, dann werden die in den Speichermodulen unter
der Adresse gespeicherten Worte in die durch die Kennung
identifizierten Register der Pufferspeichermodule eingetragen. Das angeforderte Wort kann dann aus dem durch
die Kennung identifizierten Register des durch das Adressiersignal ausgewählten Pufferspeichers auf die zweite Sammelleitung übertragen werden. Es ist aber auch möglich, daß
bei Nichtvorliegen eines Gleichheitssignales das angeforderte Wort direkt vom Speichermodul auf die zweite Sammelleitung übertragen wird.

Anhand von Ausführungsbeispielen, die in den Figuren dargestellt sind, wird die Erfindung weiter erläutert. Es
zeigen:
Fig.1 ein Prinzipbild der erfindungsgemäßen Speichervorrichtung,
Fig.2 und 3 ein Blockschaltbild der Speichervorrichtung,
Fig.4 die Zusammensetzung der Fig.2 und 3.

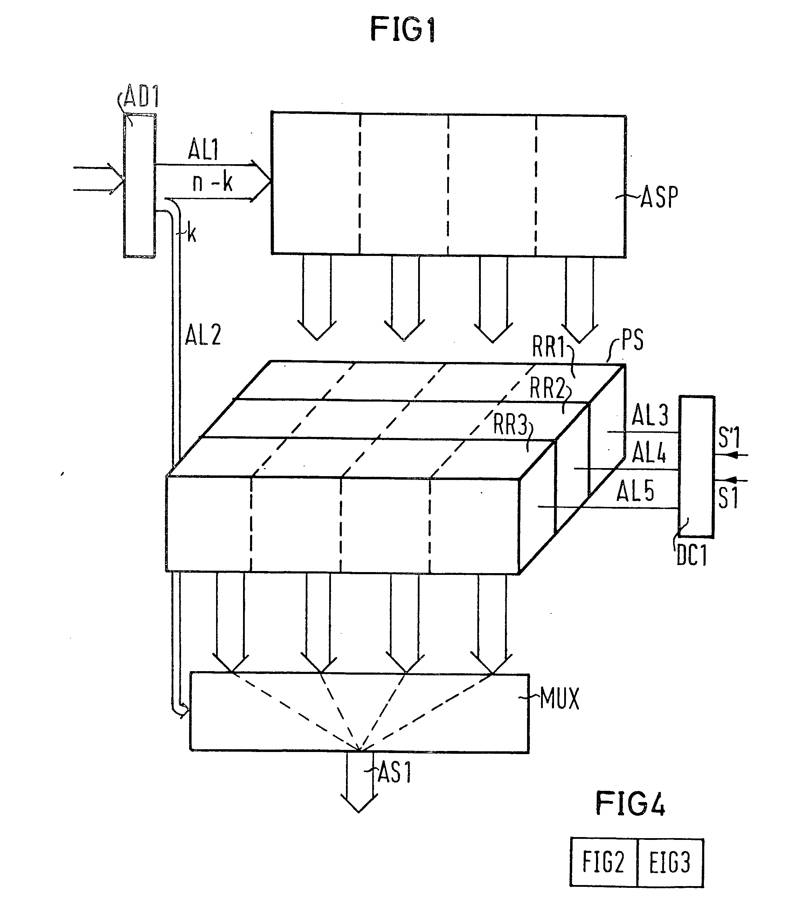

In Figur 1 ist der Arbeitsspeicher mit ASP bezeichnet.
Vom Arbeitsspeicher ASP können Worte zu einem Pufferspeicher PS übertragen werden. Der Pufferspeicher PS besteht aus drei Registern RR1, RR2 und RR3. Hinter dem Pufferspeicher PS ist ein Multiplexer MUX angeordnet, von dem eine Ausgangsleitung AS1 zum Prozessor führt. Die Adressierung der einzelnen Register RR1, RR2, RR3 erfolgt über eine Kennung, die an den Leitungen S1 einer Decodierschaltung DC1 zugeführt wird. Die Kennung kann z.B. aus zwei Bit bestehen. Die Ausgangsleitungen AL3 bis AL5 der Decodierschaltung DC1 führen zum Pufferspeicher PS. Mit einem Signal auf der Ausgangsleitung AL3 kann das Register RR1, mit einem Signal auf der Ausgangsleitung AL4 das Register RR2 und durch ein Signal auf der Ausgangsleitung AL5 das Register RR3 angesteuert werden.

Die Adressierung der Worte im Arbeitsspeicher ASP erfolgt mit Hilfe einer Adresse, die im Adressenregister AD1 abgespeichert ist. Diese kann z.B. vom Prozessor in das Adressenregister AD1 übertragen worden sein. Die Adresse besteht dabei aus n Bit. n-k höherwertige Bits der Adresse werden dem Arbeitsspeicher ASP zugeführt. Mit diesen Bits können die Speicherplätze im Arbeitsspeicher ASP adressiert werden. die k niederwertigsten Bits der Adresse werden dem Multiplexer MUX zugeführt. Mit Hilfe dieses Adressenteils wählt der Multiplexer MUX Teile des Pufferspeichers PS aus.

Im Ausführungsbeispiel der Figur 1 ist die Breite des Arbeitsspeichers ASP mit 4 Worten gewählt, entsprechend ist die Breite der Register RR im Pufferspeicher PS ebenfalls 4 Worte. Damit ist k = 2 und die Anzahl der Wortspeicherstellen $1 = 2^k = 4$.

Die in dem Pufferspeicher PS vorgesehenen Register RR sind nun einzelnen Wortarten zugeordnet. Wortarten sind

79 P 2 0 5 0 EUR

z.B. Befehle, Operanden A, Operanden B. Zum Beispiel ist das Register RR1 zur Abspeicherung der Befehle, das Register RR2 zur Abspeicherung der Operanden A, das Register RR3 zur Abspeicherung der Operanden B vorgesehen.

Bei einer Speicheranforderung vom Prozessor wird neben der Adresse in das Adressenregister AD1 auch die sogenannte Kennung übergeben, also eine Angabe darüber, ob ein Befehl, ein Operand A oder ein Operand B, d.h. welche Wortart ausgelesen werden soll. Diese Kennung wird dem Decoder DC1 über die Leitungen S1 zugeführt.

Erfolgt aufgrund der Speicheranforderung ein Zugriff in einen neuen Adressbereich, der also noch nicht im Pufferspeicher PS abgespeichert ist, so läuft ein normaler Speicherzugriff ab, bei dem gleichzeitig 4 Worte aus dem durch die n-k höherwertigen Bit der Adresse auf der Leitung AL1 angesprochenen Bereich des Arbeitsspeichers ASP in eines der drei durch die Kennung identifizierten Register RR geladen werden. Können z.B. Befehle aus dem Arbeitsspeicher ASP ausgelesen werden, dann werden 4 durch die n-k höherwertigen Bit der Adresse ausgewählte Befehlsworte aus dem Arbeitsspeicher ASP in das Register RR1 parallel ausgelesen und dort eingespeichert. Durch den Decoder DC1 wird dabei ein Signal auf der Leitung AL3 zum Register RR1 gegeben. Entsprechend werden bei anderen Wortarten die Register RR2 und RR3 bei einem Zugriff zum Arbeitsspeicher ASP gleichzeitig geladen.

Das einzelne Wort wird dann mit Hilfe des Multiplexers MUX auf die Leitung AS1 gegeben. Sind also 4 durch den gleichen n-k Adressenteil gekennzeichnete Befehlsworte in das Register RR1 übertragen worden, dann wird durch den Adressenteil auf der Leitung AL2 das gewünschte Befehlswort durch den Multiplexer MUX aus dem Register RR1 ausgelesen. Da in den einzelnen Registern RR vier Worte nebeneinander stehen, genügen zur Auswahl eines Wortes in den Registern RR zwei Bit.

Wird ein neuer Zugriff in denselben Adressenraum getätigt, hat also das neue angeforderte Wort den gleichen n-k Adressenteil, so entsteht das zu adressierende Wort bereits in dem Register RR1 des Pufferspeichers PS. Durch einen kurzen Multiplexerzugriff wird das entsprechende Wort aus dem Register RR1 ausgewählt und auf die Leitung AS1 übertragen. Die Auswahl der Register RR erfolgt dabei immer über die Kennung, die dem Decoder DC1 zugeführt wird.

Durch die Kennung erfolgt somit eine Entflechtung zwischen den verschiedenen Informationsströmen von Befehl, Operand A und Operand B. Wie bereits oben ausgeführt, wird die Kennung aus dem Mikrowort eines Mikroprogrammes entwickelt.

Der Vorteil dieser Speichervorrichtung liegt darin, daß die dem höherwertigen Adressenteil zugeordneten Worte im Pufferspeicher PS so geordnet sind, daß z.B. die Befehlsworte mit gleichem höherwertigen Adressenteil in das Register RR1, Operanden A-Worte mit gleichen höherwertigen Adressenteil in das Register RR2 und Operanden B-Worte mit gleichen höherwertigen Adressenteil in das Register RR3 übernommen werden und damit bei der Übernahme vom Arbeitsspeicher ASP in den Pufferspeicher PS bereits vorgeordnet werden. Da bei der Verarbeitung durch den Prozessor sehr häufig auf im Arbeitsspeicher ASP unmittelbar benachbart angeordnete Worte zugegriffen wird, stehen die nach dem ersten Zugriff vom Arbeitsspeicher ASP in den Pufferspeicher PS übertragenen zum selben Adressenbereich gehörenden Worte mit großer Wahrscheinlichkeit in einem der Register RR. Der Zugriff kann somit nur mit Hilfe des Multiplexers MUX erfolgen und entsprechend wird die Zugriffszeit verkleinert.

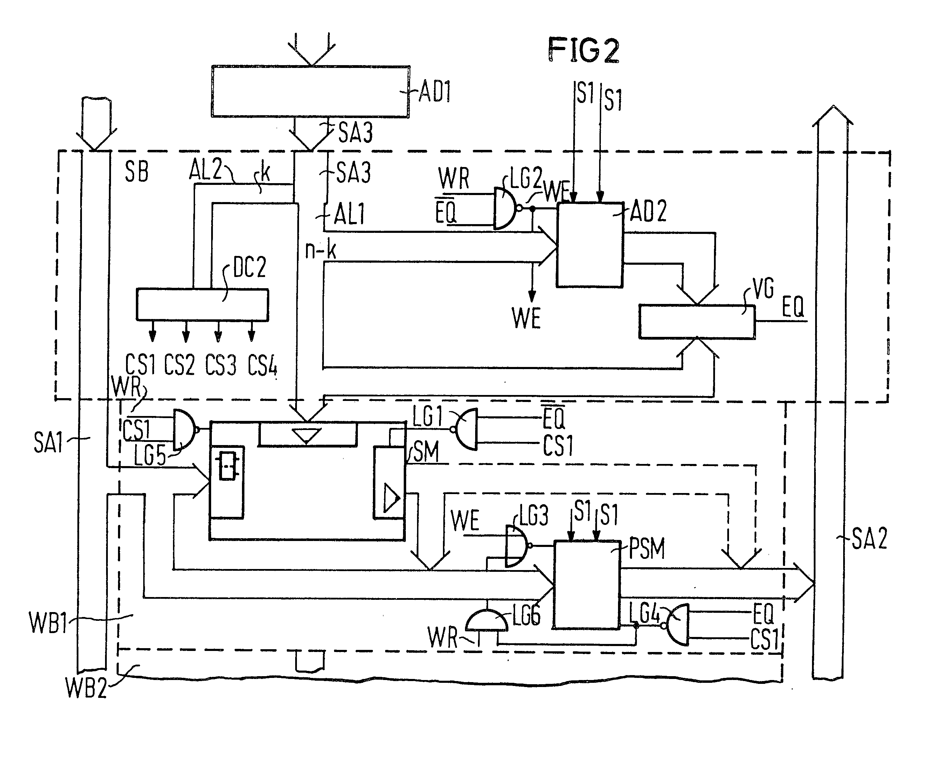

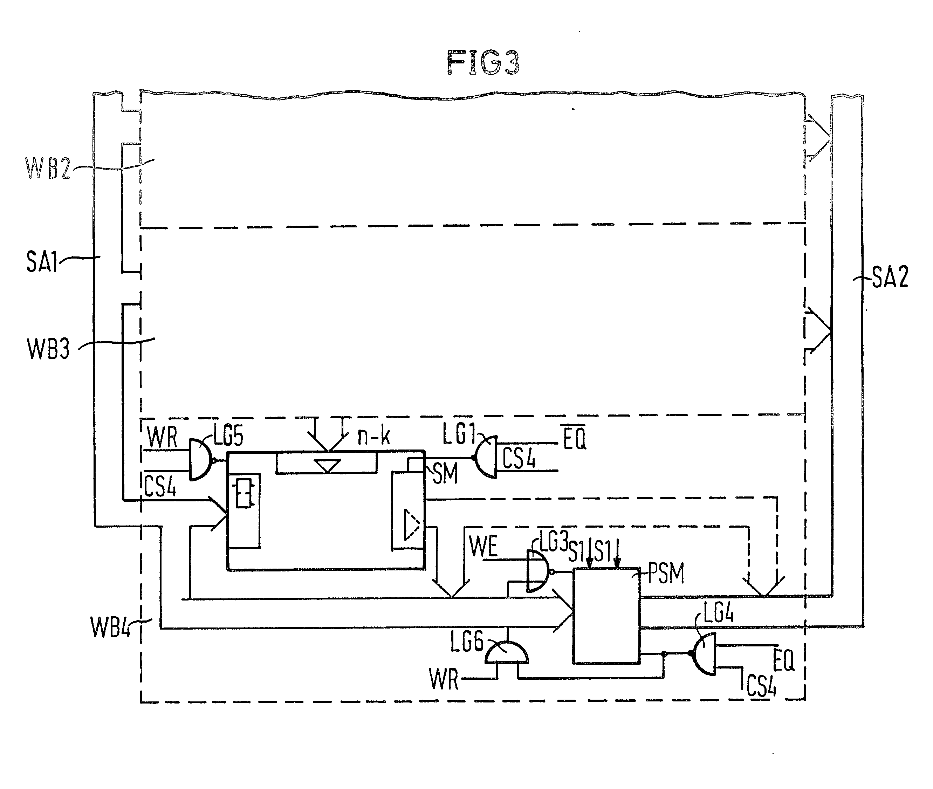

Ein Blockschaltbild der Speichervorrichtung zeigt Fig.2 und 3. Dabei ist sowohl der Arbeitsspeicher als auch der Pufferspeicher modular aufgebaut. Es sind also im Ausführungsbeispiel der Fig.2,3 vier Wortbaugruppen WB1 bis WB4 vorgesehen, von denen die erste WB1 und die letzte WB4 gezeigt sind. Alle Wortbaugruppen WB sind gleich aufgebaut. Es genügt somit, die Beschreibung einer einzigen Wortbaugruppe WB.

Jede Wortbaugruppe WB besteht aus einem Speichermodul SM und einem Pufferspeichermodul PSM. Jede Wortbaugruppe ist mit einer ersten Sammelleitung SA1 verbunden, über die den Wortbaugruppen WB die einzuschreibenden Worte zugeführt werden. Weiterhin ist jede Wortbaugruppe WB mit einer zweiten Sammelleitung SA2 verbunden, der die auszulesenden Worte von der Wortbaugruppe zugeleitet werden. Weiterhin sind bei jeder Wortbaugruppe WB Verknüpfungsglieder vorgesehen, deren Funktion später erläutert wird.

Allen Wortbaugruppen WB gemeinsam ist eine Steuerbaugruppe SB. Die Steuerbaugruppe SB enthält einen Adressenspeicher AD2, eine Vergleichsschaltung VG und eine Decodierschaltung DC2. Der Steuerbaugruppe SB wird die Adresse vom Adressenregister AD1 zugeführt. Die n-k höherwertigen Bits der Adresse werden zum Adressenspeicher AD2 geführt, außerdem werden sie den Speichermodulen der Wortbaugruppen WB zugeleitet. Die k-niederwertigen Bits der Adresse führen zur Decodierschaltung DC2. In der Decodierschaltung DC2 werden die k niederwertigen Bit der Adresse decodiert und entsprechend deren Inhalt ein Adressiersignal CS1 bis CS4 an einem der Ausgänge abgegeben. Mit Hilfe der Adressiersignale CS1 bis CS4 an den Ausgängen werden die Wortbaugruppen WB ausgewählt.

Eine Adresse, die gerade bearbeitet worden ist, wird in den Adressenspeicher AD2 übernommen. Diese enthält einer der Anzahl der Wortarten entsprechende Anzahl von Registern. Die Auswahl der Register im Adressenspeicher AD2 erfolgt mit Hilfe der Kennung, die über die Leitung S1 dem Adressenspeicher AD2 und den Pufferspeichermodulen PSM zugeführt werden. Hinter dem Adressenspeicher AD2 ist die Vergleichsschaltung VG angeordnet, der die vorhergehend bearbeitete höherwertige Adresse aus dem Adressenspeicher AD2 und die aktuelle höherwertige Adresse direkt von der Adressenleitung zugeführt wird. Sind die beiden Adressenteile identisch, dann gibt die Vergleichsschaltung VG ein Vergleichssignal EQ am Ausgang ab.

Jedes Pufferspeichermodul PSM ist ein Wort breit, d.h. enthält Registerteile RR1 bis RR4, in der jeweils ein Wort gespeichert werden kann. Entsprechend sind auch die Speichermodule SM ein Wort breit.

Die weitere Funktion der Speichervorrichtung soll mit Hilfe von Lese-und Schreibvorgängen erläutert werden. Zunächst wird angenommen, daß die auszulesenden Worte nur in den Speichermodulen SM gespeichert sind, nicht doch in den Pufferspeichermodulen PSM.

Soll ein bestimmtes Wort, z.B. ein Befehlswort, dem Prozessor über die zweite Sammelleitung SA2 zugeführt werden, dann wird die zugeordnete Adresse AD1 eingeschrieben. Von dem Adressenregister AD1 gelangt die Adresse über eine dritte Sammelleitung SA3 in die Steuerbaugruppe SB. Gleichzeitig wird die die Wortart, z.B. den Befehl, kennzeichnende Kennung auf den Leitungen S1 angeboten. Die Adresse wird nun unterteilt in n-k höherwertige Bit und k-niederwertige Bit. Die k-niederwertigen Bit werden auf der Leitung AL2 der Decodierschaltung DC2 zugeführt. Entsprechend dem Wert des niederwertigen Adressenteiles wird auf einer der Ausgangsleitungen ein Adressensignal CS erzeugt. Dieses Adressensignal soll z.B. CS1 sein. Damit wird zum Auslesen die Wortbaugruppe WB1 ausgewählt.

Aus dem Adressenspeicher AD2 wird aus dem durch die Kennung identifizierten Register die vorher bearbeitete Adresse der Vergleichsschaltung VG zugeführt. Gleichzeitig wird der aktuelle höherwertige Adressenteil n-k ebenfalls der Vergleichsschaltung VG angeboten. Da bisher aus dem Adressenraum, dem der höherwertige Adressenteil n-k gemeinsam ist, noch keine Worte bearbeitet worden sind, kann die Vergleichsschaltung VG keine Gleichheit zwischen den höherwertigen Adressenteilen feststellen. Das heißt, das Vergleichssignal EQ erscheint in invertierter Form.

Da das Vergleichssignal EQ in invertierter Form und das Adressiersignal CS1 vorliegt, wird ein Verknüpfungsglied LG1 angesteuert und das entsprechende dem höherwertigen Adressenteil zugeordnete Wort aus dem Speichermodul SM der Wortbaugruppe WB1 ausgelesen. Dieses Wort wird dem Eingang des Pufferspeichermoduls PSM der Wortbaugruppe WB1 zugeführt, es kann auch zusätzlich direkt über die gestrichelte Leitung zum Ausgang des Pufferspeichermoduls

0024721

79 P 2 0 5 0 EUR

PSM geführt werden. Damit ist das adressierte Wort direkt aus dem Speichermodul SM der Wortbaugruppe WB1 ausgelesen worden.

Gleichzeitig wird mit Hilfe eines Verknüpfungsgliedes LG2 in der Steuerbaugruppe SB ein Signal WE erzeugt, das Verknüpfungsgliedern LG3 in den Wortbaugruppen WB zugeführt wird. Dieses Signal WE zeigt an, daß das adressierte Wort nicht in einem der Pufferspeichermodule PSM gespeichert war. Mit Hilfe des Signales WE wird dann die Übernahme der durch die n-k höherwertigen Bits der Adresse adressierten Speicherstellen der Speichermodule SM in die durch die Kennung identifizierten Register der Pufferspeichermodule PSM übernommen. Damit stehen nach dem ersten Zugriff die zum gleichen Adressenraum gehörenden Worte in den Pufferspeichermodulen PSM. Gleichzeitig wird die aktuelle Adresse, und zwar der höherwertigere Teil der Adresse, in den Adressenspeicher AD2 übernommen.

Soll das nächste Wort mit dem gleichen höherwertigeren Adressenteil ausgelesen werden, dann stellt die Vergleichsschaltung VG Gleichheit zwischen der aktuellen Adresse und der im Adressenspeicher AD2 gespeicherten Adresse fest. Sie erzeugt ein Vergleichssignal EQ, das den Wortbaugruppen WB zugeführt wird. Durch die k-niederwertigeren Bits der Adresse wird durch die Decodierschaltung DC2 ein Adressiersignal CS, z.B. CS4, erzeugt und damit die Wortbaugruppe WB4 ausgewählt. Das Vorliegen des Gleichheitssignales EQ zeigt an, daß das auszulesende Wort in dem Pufferspeichermodul PSM der Wortbaugruppe WB4 steht. Durch die Kennung auf den Leitungen S1 wird das entsprechende Register im Pufferspeichermodul PSM der Wortbaugruppe WB4 ausgewählt. Dies geschieht über ein Verknüpfungsglied LG4, von der ein Signal dem Pufferspeichermodul PSM in der Wortbaugruppe WB4 zugeführt wird. Von dem Pufferspeichermodul PSM wird dann das ausgewählte Wort auf die zweite Sammelleitung SA2 gegeben. Entsprechend erfolgt die Ausgabe weiterer Worte mit gleichem höherwertigeren Adressenteil.

Beim Schreiben wird das zu speichernde Wort über die erste Sammelleitung SA1 den Wortbaugruppen WB zugeführt. Die Adresse, unter der das Wort abgespeichert werden soll, wird in das Adressenregister AD1 eingegeben. Von dort gelangt es über die dritte Sammelleitung SA3 in die Steuerbaugruppe SB. Die k-niederwertigen Bits werden der Decodierschaltung DC2 zugeführt, die an einem der Ausgänge ein Adressiersignal CS abgibt. Zum Beispiel erscheint ein Adressignal am Ausgang CS1, womit die Wortbaugruppe WB1 ausgewählt wird. Die höherwertigen Bits n-k der Adresse werden der Vergleichsschaltung VG zugeleitet. Die Vergleichsschaltung VG vergleicht diesen Adressenteil mit dem im Adressenspeicher AD2 über die Kennung an den Leitungen S1 identifizierten Adressenteil. Sind diese beiden Adressenteile verschieden, dann gibt die Vergleichsschaltung VG kein Vergleichssignal ab.

Da das Adressiersignal auf der Leitung CS1 auftritt, weiterhin ein Schreibsignal WR angelegt wird, wird über ein Verknüpfungsglied LG5 der Speichermodul SM der Wortbaugruppe WB1 ausgewählt und das angebotene Wort im Speichermodul SM unter der vom höherwertigeren Adressenteil n-k adressierten Speicherstelle abgespeichert.

Gibt die Vergleichsschaltung VG ein Vergleichssignal EQ ab, was bedeutet, daß Worte, die den gleichen höherwertigen Adressteil haben, ebenfalls in den Pufferspeichermodulen

-16-

79 P 2 0 5 0 EuR

PSM stehen, dann wird das einzuschreibende Wort ebenfalls in das durch die Kennung identifizierte und vom Adressiersignal CS ausgewählte Pufferspeichermodul PSM eingeschrieben. Dazu wird ein Signal über ein Verknüpfungsglied LG6 erzeugt.

Ein Vorteil der Speichervorrichtung besteht darin, daß die Zugriffszeit zum Pufferspeicher durch die Zeitspanne bestimmt wird, die der Vergleich einer neuen Adresse mit der zuletzt benutzten Adresse des jeweiligen Informationstystems benötigt.Hinzu kommt lediglich die Laufzeit der Sig-nale zum Prozessor. Durch die Auflösung des Arbeitsspeichers und des Pufferspeichers in Module ist es möglich, nacheinander in verschiedene Speichermodule einzuschreiben. Ein großer Vorteil der Speichervorrichtung besteht darin, daß bei Verwendung eines MOS-Arbeitsspeichers eine kleine Zugriffszeit zu einem Wort bei verhältnismäßig geringen Kosten erreichbar ist.

12 Patentansprüche
 4 Figuren

Patentansprüche

1. Speichervorrichtung mit einem Arbeitsspeicher und einem Pufferspeicher, bei dem bei Anforderung eines gespeicherten Wortes von der Adresse aus gesehen benachbart zu dem angeforderten Wort im Arbeitsspeicher angeordnete Worte vom Arbeitsspeicher zum Pufferspeicher übertragen werden und weitere angeforderte Worte mit Hilfe eines Multiplexers aus dem Pufferspeicher ausgewählt werden, d a d u r c h   g e k e n n z e i c h n e t, daß der Pufferspeicher (PS) aus der Anzahl der verschiedenen Wortarten entsprechenden Anzahl von Registern (RR) mit jeweils 1-Wort Breite ($1 = 2^k$, $k = 1$ usw.) aufgebaut ist, daß jedes Register (RR) einer Wortart zugeordnet ist, daß bei Anforderung eines Wortes die Übertragung der Worte des gleichen, dieser Wortart zugeordneten Adressenraumes in das dieser Wortart zugeordnete Register stattfindet und daß bei Anforderung eines weiteren Wortes der gleichen Wortart aus dem gleichen Adressenraum der Zugriff zu diesem Wort mit Hilfe des Multiplexers (MUX) zum Pufferspeicher (PS) erfolgt.

2. Speichervorrichtung nach Anspruch 1, d a d u r c h   g e k e n n z e i c h n e t, daß die Zuordnung der Register (RR) zu einem Wort mit Hilfe einer aus dem Mikroprogramm entwickelten, die Wortart kennzeichnenden Kennung erfolgt.

3. Speichervorrichtung nach Anspruch 1 oder 2, d a - d u r c h   g e k e n n z e i c h n e t, daß bei Anforderung eines nicht im Pufferspeicher (PS) gespeicherten Wortes neben den Worten des gleichen Adressenraums auch das angeforderte Wort in den Pufferspeicher übertragen wird und der Zugriff zu dem Wort mit Hilfe des Multiplexers (MUX) zum Pufferspeicher erfolgt.

4. Speichervorrichtung nach einem der vorhergehenden Ansprüche, g e k e n n z e i c h n e t  durch 1-Wortbau-
gruppen aus jeweils einem Speichermodul (SM) und einem
Pufferspeichermodul (PSM) mit einer der Anzahl der Wortarten entsprechenden Anzahl von Registern, durch eine
erste Sammelleitung (SA1) für die Eingabe der Worte in
die Wortbaugruppen (WB), eine zweite Sammelleitung (SA2)
für die Ausgabe der Worte aus den Wortbaugruppen (WB),
durch eine Steuerbaugruppe (SB) zur Ansteuerung der Wortbaugruppen und durch eine dritte Sammelleitung (SA3) zur
Eingabe der Adressen in die Steuerbaugruppe (SB) und
durch Leitungen (S1) zur Zufuhr der Kennung zu der
Steuerbaugruppe (SB) und den Pufferspeichermodulen.

5. Speichervorrichtung nach Anspruch 4, g e k e n n -
z e i c h n e t  durch eine Steuerbaugruppe (SB) aus einem Adressenspeicher (AD2) mit einer der Anzahl der Wortarten entsprechenden Anzahl von durch die Kennung identifizierbaren Registern, indem die n-k höherwertigeren
Bits der vorher bearbeiteten Adresse gespeichert sind,
aus einer Vergleichsschaltung (VG), in der die durch
die gleiche Kennung identifizierten n-k Bit der aktuellen Adresse mit der im Adressenspeicher (AD2) gespeicherten Adresse verglichen werden und bei Gleichheit ein
Gleichheitssignal (EQ) abgegeben wird, und aus einer
Decodierschaltung (DC2), der die k-niederwertigeren
Bits der Adresse zugeführt werden und die entsprechend
dem Wert dieser Bits Adressiersignale (CS) zur Auswahl
jeweils einer der Wortbaugruppen (WB) abgibt.

6. Speichervorrichtung nach Anspruch 5, d a d u r c h
g e k e n n z e i c h n e t, daß die Leitung für die
n-k höherwertigeren Bits der Adresse zu den Speichermoduln (SM) der Wortbaugruppe (WB) führt.

7. Speichervorrichtung nach Anspruch 6, d a d u r c h
g e k e n n z e i c h n e t, daß die erste Sammelleitung
(SA1) mit jedem Speichermodul (SM) und Pufferspeichermodul (PSM) verbunden ist und daß beim Einschreiben eines
Wortes bei Nichtvorliegen des Gleichheitssignals (EQ)
dieses Wort in den durch das Adressiersignal (CS) adressierte Speichermodul, bei Vorliegen des Gleichheitssignals (EQ) gleichzeitig auch in das durch die Kennung
identifizierte Register des gleichen Pufferspeichermoduls eingeschrieben wird.

8. Speichervorrichtung nach Anspruch 6 oder 7, d a -
d u r c h  g e k e n n z e i c h n e t, daß die zweite
Sammelleitung (SA2) mit dem Ausgang jedes Pufferspeichermoduls (PSM) verbunden ist, und daß beim Lesen bei Vorliegen eines Gleichheitssignales (EQ) das durch die
Kennung identifizierte Register des durch das Adressiersignal ausgewählten Pufferspeichermoduls an die Sammelleitung (SA2) angelegt ist.

9. Speichervorrichtung nach Anspruch 7, d a d u r c h
g e k e n n z e i c h n e t, daß beim Lesen bei Nichtvorliegen des Gleichheitssignales (EQ) die in den
Speichermoduln zum gleichen Adressenraum gehörenden gespeicherten Worten in die durch die Kennung identifizierten Register der Pufferspeichermodule (PSM) übertragen werden.

10. Speichervorrichtung nach Anspruch 9, d a d u r c h
g e k e n n z e i c h n e t, daß das angeforderte
Wort aus dem durch die Kennung identifizierten Register
des durch das Adressiersignal ausgewählten Pufferspeichermoduls an die zweite Sammelleitung (SA2) abgegeben
wird.

11. Speichervorrichtung nach Anspruch 9, d a d u r c h
g e k e n n z e i c h n e t, daß das angeforderte Wort
direkt vom Speichermodul (SM) an die zweite Sammelleitung
(SA2) abgegeben wird.

12. Speichervorrichtung nach einem der Ansprüche 4 bis
11, d a d u r c h   g e k e n n z e i c h n e t, daß
die Breite der Speichermodule (SM) und die Breite der
Pufferspeichermodule (PSM) der Wortbreite entspricht.

FIG1

FIG4

| FIG2 | EIG3 |

FIG2

FIG3

3/3

0024721